# EUROPEAN PATENT APPLICATION

(11) **EP 1 762 491 A2**
(43) Date of publication of application: **14.03.2007**
(21) Application number: 06254611.4
(22) Date of filing: 05.09.2006
(51) Int. Cl.: B64D 13/06, B64D 37/34

(54) **Deoxygenated fuel-cooler environmental control system pre-cooler for an aircraft**

(30) Priority: 07.09.2005 US 221328
(71) Applicant: UNITED TECHNOLOGIES CORPORATION, Hartford, CT 06101 (US)
(72) Inventor: Bayt, Robert L., Hebron, CT 06248 (US); Sahm, Michael K., Avon, CT 06001 (US); Sabatino, Daniel R., East Hampton, CT 06424 (US); Kaslusky, Scott, West Hartford, CT 06119 (US)
(74) Representative: Leckey, David Herbert

(57) **Abstract**

A fuel based thermal management system (10) according to the present invention includes a fuel stabilization system (18) which permits the fuel to exceed the traditional coking temperatures. An air-to-fuel heat exchanger (32) operates as an environmental control system (ECS) (36) pre-cooler such that the heat from the engine compressor bleed air is rejected into the fuel to maintain engine operating efficiency.

## Description

### BACKGROUND OF THE INVENTION

The present invention relates to a thermal management system, and more particularly to a thermal management system which utilizes a fuel stabilization unit with a fuel-air pre-cooler for an aircraft environmental control system.

Aircraft utilize sophisticated Thermal Management Systems (TMS) for component and environmental thermal management. An environmental control system (ECS) provides a supply of conditioned air to an enclosure, such as an aircraft cabin and cockpit. Conventional ECSs have utilized an air cycle cooling system which is in a heat exchange relationship with a liquid loop. The liquid loop typically cools other heat loads such as avionics packages. Interaction between the air and liquid subsystems is relatively complex.

In one conventional ECS, a flow of bleed air is drawn from an intermediate or high pressure engine compressor section of a gas turbine engine. Although effective, a penalty paid for the use of bleed air is a reduction in operating efficiency of the engine from which the air is bled. Furthermore, the bleed air is often above 700 degrees Fahrenheit (371°C) and must be pre-cooled to below 450 degrees Fahrenheit (232°C) in an engine pylon mounted air-to-air heat exchanger prior to being communicated through the aircraft wing and into the ECS. The cooler air communicated to the air-to-air heat exchanger is fan bypass airflow drawn from a fan section of the of the aircraft engine. The fan bypass airflow is air drawn from the fan duct of a gas turbine engine which further reduces the operating efficiency of the engine.

Accordingly, it is desirable to provide an effective, lightweight thermal management system for an aircraft ECS which minimizes reduction in engine operating efficiency.

### SUMMARY OF THE INVENTION

A fuel based thermal management system according to the present invention includes a fuel stabilization system which permits the fuel to exceed the traditional coking temperatures. An air-to-fuel heat exchanger operates as an environmental control system (ECS) pre-cooler such that the heat from the engine compressor bleed air is rejected into the fuel. The deoxygenated fuel air-to-fuel heat exchanger minimizes drawing of engine bypass airflow with a conventional air-to-air pre-cooler which would otherwise decrease engine operating efficiency.

The present invention therefore provides an effective, lightweight thermal management system for an aircraft ECS which minimizes reduction in engine operating efficiency.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:

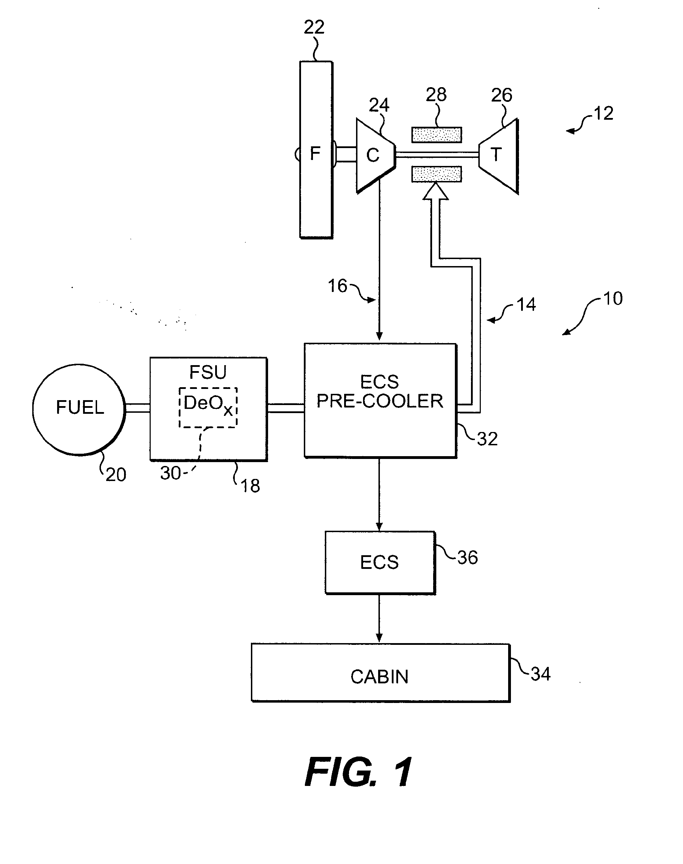

Figure 1 is a general block diagram of a thermal management system according to the present invention.

### DETAILED DESCRIPTION OF THE PREFERRED EMBODIMENT

Figure 1 illustrates a general perspective view of a fuel based thermal management system (TMS) 10 for an energy conversion device (ECD) 12. The TMS includes a fuel circuit 14 and an environmental control system circuit 16.

A fuel stabilization system (FSU) 18 receives a liquid fuel from a fuel tank system 20 (illustrated schematically). It should be understood that the location of the FSU 18 represents only one of many possible locations, and that the FSU may be located in other locations while still deoxygenating the fuel to be advantageously utilized at higher temperatures with high temperature resistant components.

The ECD 12 may exist in a variety of forms in which the fuel, at some point prior to eventual use for processing, for combustion or for some form of energy release, acquires sufficient heat to support autoxidation reactions and coking if dissolved oxygen is present to any significant extent in the fuel. One form of the ECD 12 is a gas turbine engine, and particularly a turbofan engine illustrated schematically which includes a fan section 22, a compressor section 24, a turbine section 26, and a combustor section 28.

The fuel is typically a hydrocarbon such as a liquid jet fuel. The FSU 18 includes a fuel deoxygenation system 30 which permits the fuel to remain stable at much higher temperatures without coking by removing dissolved oxygen from the liquid fuel which enables higher temperature loads to reject their heat to the fuel. It should be understood that various deoxygenation systems will benefit from the present invention. For further understanding of a fuel deoxygenator system and associated components thereof, attention is directed to United States Patent Nos. 6,315,815 and 6,709,492 which are assigned to the assignee of the instant invention and which are hereby incorporated herein in their entirety.

The fuel in the fuel circuit 14 serves as a coolant for the environmental control system (ECS) circuit 16 to absorb thermal energy therefrom prior to the elevated temperature fuel being communication to the combustor section 28 of the ECD 12. In general, heating of the fuel increases efficiency of the ECD 12. The deoxygenation system 30 permits fuel to accommodate temperatures upwards of 900 degrees Fahrenheit (482°C).

A liquid-to-air heat exchanger system 32 is located at an intersection between the circuits 14, 16. The liquid-to-air heat exchanger system 32 is embodied herein as an ECS pre-cooler, however, other subsystems which require thermal management will likewise benefit from the present invention and that other heat exchanger subsystems may be incorporated into the TMS 10. It should be understood that various precautions may be preferably taken due to the close proximity of the compressed air with the high temperature deoxygenated fuel, however, such precautions are well within one of reasonable skill in the thermal management art.

The ECS circuit 14 receives compressed air from the compressor section 24 of the ECD 12. The compressed air is communicated through the liquid-to-air heat exchanger system 32 prior to communication to an aircraft cabin 34 through an aircraft environmental control system (ECS) 36. The liquid-to-air heat exchanger system 32 preferably reduces the temperature of the compressed engine air to approximately 300 degrees Fahrenheit (149°C) prior to further conventional cooling in the ECS 36 for distribution to the cabin 34 as generally understood.

The deoxygenated fuel is preferably raised to a temperature which exceeds 325 degrees Fahrenheit (163°C) in the liquid-to-air heat exchanger system 32 prior to communication to the combustor section of the ECD 12. This and greater temperatures are available due to the deoxygenation system 30 which permits the deoxygenated fuel to accommodate temperatures upwards of 900 degrees Fahrenheit (482°C). The performance of the ECD 12 is improved with otherwise wasted thermal energy. Moreover, the increased cooling of the compressed air prior to communication to the ECS 36 due to the air-to-liquid heat exchanger system 32 advantageously minimizes the size and/or weight of this and other heat exchangers associated with the ECS 36. Such thermal management avoids or minimizes the usage of fan bypass air which would otherwise reduce engine operating efficiency.

Although particular step sequences are shown, described, and claimed, it should be understood that steps may be performed in any order, separated or combined unless otherwise indicated and will still benefit from the present invention.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A thermal management system (10) comprising:
a fuel stabilization system (18);
a liquid-to-air heat exchanger system (32) in fluid communication with said fuel stabilization system (18); and
an environmental control system (36) in communication with said liquid-to-air heat exchanger system (32).

2. The thermal management system as recited in claim 1, wherein said fuel stabilization system (18) comprises a deoxygenation system (30).

3. The thermal management system as recited in claim 1 or 2, wherein said liquid-to-air heat exchanger (32) is in communication with compressed air from an Energy Conversion Device (12).

4. The thermal management system as recited in claim 3, wherein said Energy Conversion Device (10) is an aircraft gas turbine engine.

5. The thermal management system as recited in any preceding claim, wherein said liquid-to-air heat exchanger (32) is a fuel-to-air heat exchanger.

6. The thermal management system as recited in any preceding claim, wherein said liquid-to-air heat exchanger (32) operates to reduce a temperature of a compressed air to approximately 300 degrees Fahrenheit (149°C).

7. The thermal management system as recited in any preceding claim, wherein said liquid-to-air heat exchanger (32) operates to reduce a temperature of a compressed air to approximate a liquid inlet temperature of said liquid-to-air heat exchanger system.

8. The thermal management system as recited in any preceding claim, wherein said liquid-to-air heat exchanger (32) operates with fuel at temperatures exceeding 325 degrees Fahrenheit (163°C).

9. The thermal management system as recited in any preceding claim, wherein said environmental control system (36) communicates airflow to an aircraft cabin (34).

10. The thermal management system as recited in any preceding claim 8, wherein said environmental control system (36) communicates airflow to an electronic device.

11. The thermal management system as recited in any preceding claim, wherein fuel from said liquid-to-air heat exchanger (32) is in communication with a combustor section (28) of a or said gas turbine engine (12).

12. A method of thermal management comprising the steps of:
(1) deoxygenating a fuel to provide a deoxygenated fuel;
(2) communicating the fuel through a liquid-to-air heat exchanger system (32);
(3) communicating a compressed air from an energy conversion device (12) through the liquid-to-air heat exchanger system (32) to reject heat from the compressed air to the deoxygenated fuel; and
(4) communicating the compressed air from the liquid-to-air heat exchanger (32) to an environmental control system (36).

13. A method as recited in claim 12, wherein said step (3) further comprises the step of:
drawing the compressed air from a compressor section (24) of a gas turbine engine (12).

14. A method as recited in claim 12 or 13, wherein said step (3) further comprises the step of:
rejecting heat to the deoxygenated fuel to raise the temperature of the fuel to above approximately 325 degrees Fahrenheit (163°C).

15. A method as recited in claim 14, further comprising the steps of:
communicating the deoxygenated fuel from the liquid-to-air heat exchanger (32) system to a combustor section (28) of a or said gas turbine engine (12).
